# EUROPÄISCHE PATENTANMELDUNG

(11) **EP 2 400 092 A1**
(43) Veröffentlichungstag der Anmeldung: **28.12.2011**
(21) Anmeldenummer: 11005246.1
(22) Anmeldetag: 28.06.2011
(51) Int. Cl.: E05D 7/04, E04B 1/76

(54) **Befestigungsanker für Halteelement**

(30) Priorität: 28.06.2010 DE 202010009614 U; 28.02.2011 DE 102011012643
(71) Anmelder: Hupfauf, Peter, 72513 Hettingen (DE)
(72) Erfinder: Hupfauf, Peter, 72513 Hettingen (DE)
(74) Vertreter: Dobler, Markus

(57) **Zusammenfassung**

Die Erfindung betrifft einen Befestigungsanker (1) für ein Halteelement (2), vorzugsweise für Fensterläden, welcher zur Befestigung in einer Wandung (3) mit einer außen liegenden Dämmschicht (4) und einer Innenwand (5) ausgebildet ist, wobei der Befestigungsanker (1) einen ersten Abschnitt (6) zur Aufnahme des Halteelementes (2) und einen zweiten Abschnitt (7) zur Befestigung in der Innenwand (5) umfasst und der erste Abschnitt (6) und/oder der zweite Abschnitt (7) aus einem Rundmaterial mit je einer Mantelfläche gebildet ist, und wobei zwischen dem ersten Abschnitt (6) und dem zweiten Abschnitt (7) des Befestigungsankers (1) ein Dämmelement (8) angeordnet ist, welches eine geringe Wärmeleitung zur Vermeidung von Schimmelbildung in der Dämmschicht aufweist. Hierzu ist das Dämmelement (8) in der Innenwand (5) der Wandung (2) aufgenommen.

## Beschreibung

Die Erfindung betrifft einen Befestigungsanker für ein Halteelement nach dem Oberbegriff des Patentanspruchs 1.

### Stand der Technik

Zur Befestigung von Gegenständen an einer Wandung mit einer außen liegenden Dämmschicht, beispielsweise von Fensterläden, Markisen oder sonstigen Gegenständen sind aufgrund hoher Lasten und der fehlenden Tragfähigkeit der Dämmschicht selbst spezielle Befestigungsvorrichtungen erforderlich. Dabei ist es erforderlich, dass durch die Befestigung keine Kälte- bzw. Wärmebrücke zwischen einem Mauerwerk und der Umgebung durch eine Dämmschicht hindurch entsteht.

Aus dem Stand der Technik sind eine Vielzahl von unterschiedlichen Ausführungsformen von Befestigungsvorrichtungen zur Befestigung von Gegenständen bzw. Halten hoher Lasten an einer Wandung bekannt.

Beispielsweise sind aus der DE 10 2007 016 236 B3 Abstandshalter zur Befestigung eines Halteelementes in einer Wandung bekannt, wobei ein Halteelement zur Anordnung eines Gegenstandes über ein Anschlussgewinde mit einem Abstandshalter verbunden ist, wobei der Abstandshalter zwei Abschnitte aufweist, die mittels einem Dämmelement miteinander verbunden sind und wobei das Dämmelement in der Dämmschicht einer Wandung angeordnet ist. Der Abstandshalter weist auf seinem Umfang eine Profilierung auf und ist mit seinem zweiten Abschnitt in der Wandung befestigt.

Nachteilig bei dem aus dem Stand der Technik bekannten Abstandshalter ist, dass das zwischen den beiden Abschnitten des Abstandshalters angeordnete Dämmelement in der Dämmschicht der Wandung angeordnet ist, wodurch eine Wärmeleitung, ausgehend von der Innenwand bis zum Dämmelement im zweiten Abschnitt des Abstandshalters erfolgt. Aufgrund dieser Wärmeleitung entsteht zwischen der Innenwand und der Dämmschicht eine Wärmebrücke. Im Bereich des Dämmelementes sinkt bei kalten Außentemperaturen die Temperatur in der Dämmschicht stärker ab als in der Innenwand, wodurch bei Unterschreiten der Taupunkttemperatur am zweiten Abschnitt des Abstandshalters Tauwasser (Kondenswasser) ausfällt. Es besteht die Gefahr von Feuchtigkeit bis hin zu Schimmelbildung in der Dämmschicht.

Aus diesem Grunde hat sich die Erfindung die Aufgabe gestellt, eine Befestigungsvorrichtung zur Anordnung von Gegenständen auf einer Wandung mit Dämmschicht derart weiterzubilden, dass der oben genannte Nachteil vermieden wird, ohne die Stabilität der Befestigung und deren Nachhaltigkeit zu beeinflussen.

Diese Aufgabe wird, ausgehend von dem Oberbegriff des Patentanspruchs 1, durch die kennzeichnenden Merkmale des Patentanspruchs 1 gelöst.

Vorteilhafte Weiterbildungen sowie zweckmäßige Ausgestaltungen der Erfindung sind in den abhängigen Schutzansprüchen angegeben.

### Offenbarung der Erfindung

Die Erfindung geht von einem Befestigungsanker für ein Halteelement aus, vorzugsweise für Fensterläden, welcher zur Befestigung in einer Wandung mit einer außen liegenden Dämmschicht und einer Innenwand ausgebildet ist, wobei der Befestigungsanker einen ersten Abschnitt zur Aufnahme des Halteelements und einen zweiten Abschnitt zur Befestigung in der Innenwand umfasst und der erste Abschnitt und/oder der zweite Abschnitt aus einem Rundmaterial mit je einer Mantelfläche gebildet ist, und wobei zwischen dem ersten Abschnitt und dem zweiten Abschnitt des Befestigungsankers ein Dämmelement angeordnet ist, welches eine geringe Wärmeleitung aufweist.

Der Kern der Erfindung liegt darin, dass das Dämmelement in der Innenwand der Wandung aufgenommen ist.

Das Dämmelement ist in der Wandung, vorzugsweise in der Innenwand angeordnet, wodurch der erste Abschnitt des Befestigungsankers in der Dämmschicht getrennt von dem zweiten Abschnitt des Befestigungsankers in der Innenwand angeordnet ist. Dadurch entsteht keine zusätzliche Wärmeleitung von der Innenwandung über den Befestigungsanker in die Dämmschicht der Wandung. Dies vermeidet eine Kondensatbildung und eine damit verbundene eventuelle Schimmelpilzbildung in der Dämmschicht.

Zur Verdeutlichung der in den Unteransprüchen dargestellten Weiterbildungen sowie Ausführungsformen und den damit verbundenen technischen Vorteilen werden nachfolgende Ausführungsbeispiele anhand der Figuren beschrieben, aus denen weitere Merkmale der Erfindung hervorgehen.

Dabei zeigen:
Fig. 1: Eine Seitenansicht einer Innenwand mit einer Dämmschicht und darin angeordneten Befestigungsanker im Schnitt;
Fig. 2: Ein Dämmelement zur Verbindung eines in zwei Abschnitte unterteilten Befestigungsankers;
Fig. 3: Eine zweite Ausführungsform eines Dämmelements;
Fig. 4: Eine dritte Ausführungsform eines Dämmelements;
Fig. 5: Eine schematische Darstellung der einzelnen Abschnitte des Befestigungsankers mit Längsnut in der Perspektive.

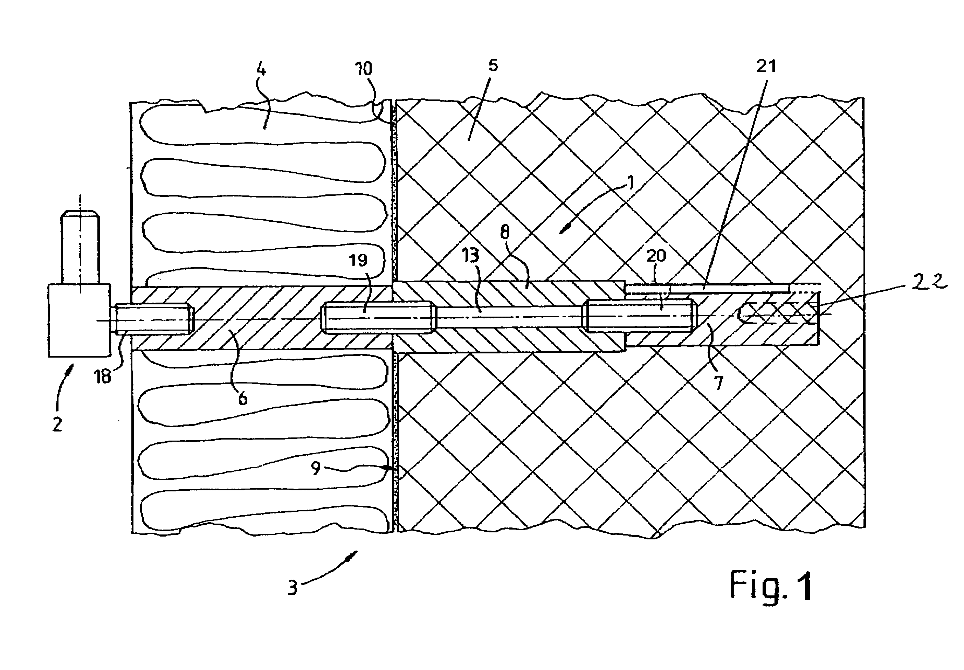

In Fig. 1 ist eine Schnittdarstellung eines erfindungsgemäßen Befestigungsankers 1 in einer wandung 3 gezeigt, wobei die Wandung 3 eine Innenwand 5 mit einer darauf angeordneten Dämmschicht 4 umfasst. Die Dämmschicht 4 wird beispielsweise mittels eines Klebers in einer Kleberschicht 10 auf der Innenwand 5 der Wandung 3 befestigt.

Der Befestigungsanker 1 umfasst einen ersten Abschnitt 6 und einen zweiten Abschnitt 7, welche mittels eines Dämmelements 8 miteinander verbunden sind. Die Verbindung zwischen dem Dämmelement 8 und dem ersten und zweiten Abschnitt 6, 7 erfolgt über Gewindestangen 19, 20, die jeweils in stirnseitig angeordnete Gewindebohrungen im Dämmelement 8 und dem ersten und zweiten Abschnitt 6, 7 eingeschraubt sind und eine lösbare Verbindung bilden. Alternativ können diese Verbindungen auch durch Hinzugabe von Klebstoffen fixiert werden.

Der Befestigungsanker 1 wird in einer vor seiner Montage hergestellten Ausnehmung in der Wandung 3 derart angeordnet, dass das Dämmelement 8 vorzugsweise bündig mit der Außenfläche 9 in der Innenwand 5 abschließt und zentrisch angeordnet ist. Hierzu kann der erste Abschnitt 6 entsprechend der Dicke der Dämmschicht 4 exakt hergestellt werden. Durch die Lage des Dämmelements 4 wird eine Wärmeleitung, ausgehend von der Innenwand 5 über den Befestigungsanker 1 in die Dämmschicht 4 vermieden. Dies vermeidet eine Kondensatbildung bei niedrigen Außentemperaturen am Übergang zwischen dem Dämmelement 8 und dem ersten Abschnitt 6 des Befestigungsankers 1 und eine damit verbundene Schimmelpilzbildung in der Dämmschicht 5.

Der Befestigungsanker 1 weist an seinem nach außen gerichteten freien Ende ein Halteelement 2, beispielsweise einen Kloben auf, welches zur Anordnung von Gegenständen, beispielsweise von Fensterläden bzw. anderen Gegenständen über ein Befestigungsgewinde 18 mit dem Befestigungsanker 1 verbunden ist.

In der hier dargestellten Ausführungsform weist der Befestigungsanker 1 auf seiner Mantelfläche eine Längsnut 21 auf, welche in Kombination mit einem Montagekleber eine verdrehsichere Anordnung eines Befestigungsankers 1 in der Innenwand 5 bildet und insgesamt zu einem verbesserten Halt des Befestigungsankers 1 in der Innenwand 5 der Wandung 3 führt. Dadurch kann eine kostengünstige Herstellung eines Befestigungsankers 1 mit einem festen und verdrehsicheren Halt in der Innenwand 5 ausgeführt werden.

Die Anordnung der Längsnut 21 kann beispielsweise in einem Teilbereich der Mantelfläche ausgeführt werden (durchgezogene Linie) oder derart, dass die Längsnut 21 an dem, dem Dämmelement 8 abgewandten Ende des zweiten Abschnitts 7 austritt (gestrichelte Linie). Eine am Ende des zweiten Abschnitts 7 austretende Längsnut 21 ist kostengünstig herzustellen, da ein Fräsvorgang zum Ende des Abschnitts hin auslaufen kann.

Eine weitere überdies kostengünstige Herstellung eines Befestigungsankers 1 ist die Ausführungsform einer Längsnut 21 im zweiten Abschnitt 7, welche vollständig durchgehend auf der Mantelfläche verläuft (zusätzliche vorderseitige gestrichelte Linie) gegeben. Diese Ausführungsform des zweiten Abschnitts 7 ist dadurch beispielsweise im Strangpressverfahren herstellbar, da das Bauteil als ablängbare Meterware vorliegen kann.

Es ist denkbar, dass die Mantelfläche eines zweiten Abschnitts 7 mehrere Längsnuten 21 aufweist, welche vorzugsweise symmetrisch zueinander angeordnet sind. Dadurch kann die Verdrehsicherheit des Befestigungsankers 1 in der Innenwand 5 weiter verbessert werden.

Offene Hohlräume am Befestigungsanker werden bei der Montage ggf. mit Klebstoff gefüllt, wenn der Befestigungsanker in die Ausnehmung in der Innenwand 5 eingesetzt wird.

Je nach Wanddicke der Innenwand 5 und verarbeitungsbedingter Präzision der Positionierung ist eine Anordnung eines erfindungsgemäßen Befestigungsankers 1 in der Innenwand 5 derart möglich, dass das Dämmelement 8 noch mit einem kleinen Abschnitt in die Dämmschicht 4 der Wandung 3 hineinragt. Dies hat jedoch keine negativen Auswirkungen auf die erwünschte Unterbrechung der Wärmeleitfähigkeit des Befestigungsankers 1.

Zur Verbesserung der Dämmeigenschaften des Befestigungsankers 1 sind unterschiedliche Ausführungsformen eines Dämmelements 8 möglich, welche in den nachfolgenden Figuren näher beschrieben werden.

Zum Einsatz des Befestigungsankers 1 an verschiedenen Wandunden 3 mit unterschiedlichen Dämmschichtdicken der Dämmschicht 4 besteht die Möglichkeit, sowohl den ersten Abschnitt 6 als auch den zweiten Abschnitt 7 erfindungsgemäß auszubilden und an beiden Enden eine Gewindebohrung vorzusehen. Die beiden Abschnitte 6,7 können in ihrer Länge je einer genutzten Dämmschichtdicke angepasst werden, und das Halteelement 2, welches üblicherweise als Kolben ausgebildet ist, kann je nach dem an kürzeren Abschnitt oder am längeren Abschnitt eingeschraubt sein. Auf diese Weise kann mit einem Befestigungsanker 1 mit zwischen zwei Abschnitten 6,7 angeordnetem Dämmelement 8 je nach Einschraubseite des Halteelements 2 eine unterschiedliche Dämmschichtdicke erfindungsgemäß überbrückt werden.

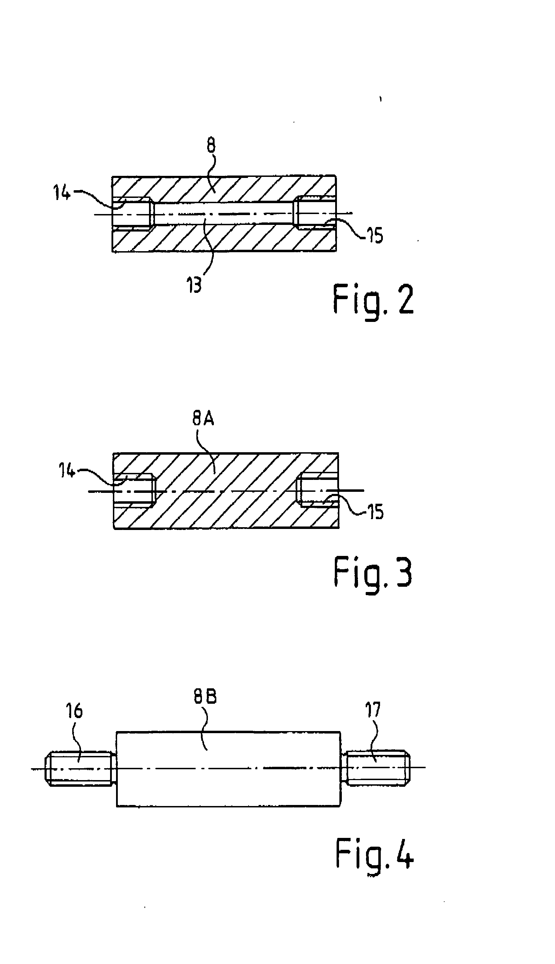

In Fig. 2 ist ein erfindungsgemäßes Dämmelement 8 in einer Schnittdarstellung gezeigt, wobei das Dämmelement 8 eine axial verlaufende, zentrische Ausnehmung aufweist, die in ihren Endbereichen mit jeweils einem Innengewinde 14 und 15 versehen ist.

Im montierten Zustand des Dämmelementes 8 stehen die Innengewinde 14 und 15 im Eingriff mit den Gewindestangen 19, 20, wodurch die zentrisch verlaufende Ausnehmung einen Hohlraum 13 bildet. Dieser Hohlraum 13 verbessert die Isolationseigenschaften des Dämmelementes 8 und verringert die Wärmeleitfähigkeit.

Fig. 3 zeigt eine weitere Ausführungsform eines Dämmelementes 8A, wobei im Unterschied zur Fig. 2 das Dämmelement als Vollmaterial ausgebildet ist, welches in seinen Endbereichen mit einem Innengewinde 14 und 15 zur Aufnahme von Gewindestangen 19 und 20 versehen ist. Diese Ausführungsform erhöht die Stabilität des Dämmelementes 8.

In Fig. 4 ist eine dritte Ausführungsform eines Dämmelementes 8B gezeigt, wobei das Dämmelement aus Vollmaterial gebildet ist und in seinen Endbereichen jeweils einen Gewindezapfen 16 und 17 aufweist, die zur Befestigung des Dämmelementes 8 mit den Abschnitten 6, 7 des Befestigungsanker 1 in entsprechend angeordnete Innengewinde eingeschraubt werden.

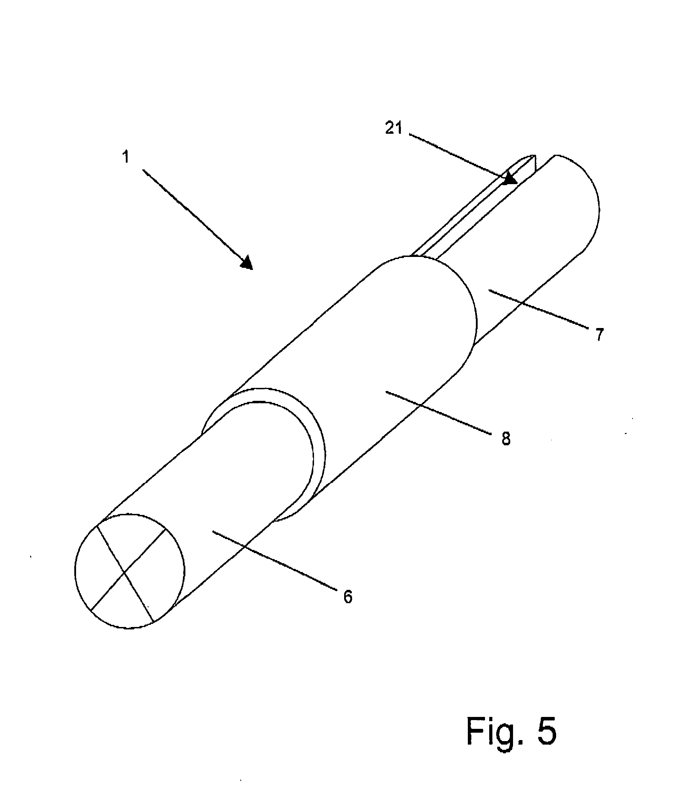

Figur 5 zeigt eine schematische Darstellung der einzelnen Elemente des erfindungsgemäßen Befestigungsankers 1 mit einer Längsnut 21 im zweiten Abschnitt 7 in der Perspektive. Die Position des ersten Abschnitts 6 eines in einer Wandung 3 angeordneten Befestigungsankers 1 liegt in der Dämmschicht 4 der Wandung 3. In der mit gekreuzten Linien gekennzeichneten Stirnfläche des ersten Abschnitts 6 wird zentrisch ein Innengewinde oder ein sonstiges Befestigungsmittel eingebracht, welches zur Aufnahme des Halteelements 2 dient (siehe Fig. 1).

Dem ersten Abschnitt 6 schließt sich das Dämmelement 8 an. Die Position des Dämmelements 8 liegt in der Innenwand 5, wodurch ein Wärmeübergang bei niedrigen Außentemperaturen, ausgehend von Innenwand 5 über den zweiten Abschnitt 7 in den ersten Abschnitt 6 vermieden wird. Diese Isolationseigenschaft vermeidet eine Kondensatbildung und eine damit verbundene Schimmelpilzbildung in der Dämmschicht 8.

Dem Dämmelement 8 schließt sich ein zweiter Abschnitt 7 an. Die Mantelfläche des zweiten Abschnitts 7 weist eine Längsnut 21 auf, welche in der hier dargestellten Ausführungsform vollständig durchgehend verläuft. Die Längsnut 21 bildet in Zusammenwirkung mit einem Montagekleber in der Innenwand eine ausreichende Verdrehsicherheit für den gesamten Befestigungsankers 1 aus.

Ein weiterer Vorteil der Anordnung des Dämmelements in dem Bereich der Innenwand / des Mauerwerks liegt darin, dass die Knickstabilität ggf. verbessert wird. Die Wand kann bei Querbelastung mehr Kraft aufnehmen, als es beispielsweise durch ein oftmals recht weiches und sprödes Dämmmaterial einer Außenwand-Dämmung erfolgen kann. Bei der Anbringung des Dämmelements in der Dämmung müssen diese Kräfte vollständig durch das Dämmelement auf den Anker in der Innenwand übertragen werden.

### BezugszeiChenliste:

- 1.: Befestigungsanker
- 2.: Halteelement
- 3.: Wandung
- 4.: Dämmschicht
- 5.: Innenwand
- 6.: erster Abschnitt
- 7.: zweiter Abschnitt
- 8.: Dämmelement
- 8A.: Dämmelement
- 8B.: Dämmelement
- 9.: Innenwandoberfläche
- 10.: Kleberschicht
- 11.: Gewindebohrung
- 12.: Gewindebohrung
- 13.: Hohlraum
- 14.: Innengewinde
- 15.: Innengewinde
- 26.: Gewindezapfen
- 17.: Gewindezapfen
- 18.: Befestigungsgewinde
- 19.: Gewindestange
- 20.: Gewindestange
- 21.: Längsnut
- 22.: Gewindebohrung

## Patentansprüche

1. Befestigungsanker (1) für ein Halteelement (2), vorzugsweise für Fensterläden, welcher zur Befestigung in einer Wandung (3) mit einer außen liegenden Dämmschicht (4) und einer Innenwand (5) ausgebildet ist, wobei der Befestigungsanker (1) einen ersten Abschnitt (6) zur Aufnahme des Halteelementes (2) und einen zweiten Abschnitt (7) zur Befestigung in der Innenwand (5) umfasst und der erste Abschnitt (6) und/oder der zweite Abschnitt (7) aus einem Rundmaterial mit je einer Mantelfläche gebildet 1st, und wobei zwischen dem ersten Abschnitt (6) und dem zweiten Abschnitt (7) des Befestigungsankers (1) ein Dämmelement (8) angeordnet ist, welches eine geringe Wärmeleitung aufweist, **dadurch gekennzeichnet, dass** das Dämmelement (8) in der Innenwand (5) der Wandung (2) aufgenommen ist.

2. Befestigungsanker (1) nach Anspruch 1, **dadurch gekennzeichnet, dass** zumindest ein Teil der Mantelfläche des zweiten Abschnitts (7) mindestens eine Längsnut (21) aufweist.

3. Befestigungsanker (1) nach Anspruch 2, **dadurch gekennzeichnet, dass** die Längsnut (21) an dem, dem Dämmelement (8) abgewandten Ende des zweiten Abschnitts (7) austritt.

4. Befestigungsanker (1) nach einem der vorhergehenden Ansprüche 2 bis 3, **dadurch gekennzeichnet, dass** die Längsnut (21) auf der Mantelfläche des zweiten Abschnitts (7) vollständig durchgehend verläuft.

5. Befestigungsanker (1) nach einem der vorhergehenden Ansprüche 1 bis 4, **dadurch gekennzeichnet, dass** die Mantelfläche des zweiten Abschnitts (7) mindestens zwei Längsnuten (21) aufweist, welche vorzugsweise symmetrisch zueinander angeordnet sind.

6. Befestigungsanker (1) nach einem der vorhergehenden Ansprüche 1 bis 5, **dadurch gekennzeichnet, dass** das Dämmelement (8) den ersten und den zweiten Abschnitt (6, 7) des Befestigungsankers (1) mittels einer ersten und zweiten Gewindebohrung (11, 12) über mindestens eine Gewindestange (19, 20) verbindet.

7. Befestigungsanker (1) nach Anspruch 6, **dadurch gekennzeichnet, dass** zwischen den beiden Gewindebohrungen (11, 12) ein Hohlraum (13) im Dämmelement (8) vorhanden ist.

8. Befestigungsanker (1) nach einem der vorhergehenden Ansprüche 1 bis 7, **dadurch gekennzeichnet, dass** das Dämmelement (8) aus einem Vollmaterial mit Sacklochbohrungen gebildet ist, wobei die Sacklochbohrungen jeweils ein Innengewinde (14, 15) zur Aufnahme einer Gewindestange (19, 20) aufweisen.

9. Befestigungsanker (1) nach einem der vorangegangenen Ansprüche 1 bis 8, **dadurch gekennzeichnet, dass** an dem zweiten Abschnitt (7) an dem, dem Dämmelement (8) abgewandten Ende eine vorzugsweise zentrische Gewindebohrung (22) vorgesehen ist, wobei die Gewindebohrung (22) vorzugsweise ebenfalls zur Aufnahme des Halteelements (2) geeignet dimensioniert ist.

10. Dämmelement (8) zur Verwendung in einem Befestigungsanker (1) nach den Ansprüchen 1 bis 8, **dadurch gekennzeichnet, dass** das Dämmelement (8) zur Verbindung des ersten Abschnitts (6) mit zweiten Abschnitt (7) des Befestigungsankers (1) zwei angeformte Gewindezapfen (16, 17) umfasst.
